(19) Europäisches Patentamt
European Patent Office
Office européen des brevets

(11) Veröffentlichungsnummer: **0 054 668**
**B1**

(12) # EUROPÄISCHE PATENTSCHRIFT

(45) Veröffentlichungstag der Patentschrift: **16.01.85**

(51) Int. Cl.[4]: **C 07 F 7/18**

(21) Anmeldenummer: **81108621.4**

(22) Anmeldetag: **21.10.81**

(54) **Verfahren zur Herstellung von (Jodorganyl)alkoxisilanen.**

(30) Priorität: **19.12.80 DE 3047995**

(43) Veröffentlichungstag der Anmeldung:
**30.06.82 Patentblatt 82/26**

(45) Bekanntmachung des Hinweises auf die Patenterteilung:
**16.01.85 Patentblatt 85/3**

(84) Benannte Vertragsstaaten:
**BE DE FR GB NL**

(56) Entgegenhaltungen:
**US - A - 3 390 976**
**US - A - 3 780 127**

**Angewandte Chemie, Band 86 (S), Seite 194, 1974**
**Phase Transfer Catalysis Principles and Techniques, C.M. Starks and C. Liotta, Seiten 60,61,77, 112-125**

(73) Patentinhaber: **Degussa Aktiengesellschaft, Weissfrauenstrasse 9, D-6000 Frankfurt am Main 1 (DE)**

(72) Erfinder: **Panster, Peter, Dr., Im Lochseif 8, D-6458 Rodenbach (DE)**
Erfinder: **Karl, Alfons, Dr., Birkenweg 1, D-6450 Hanau 9 (DE)**
Erfinder: **Buder, Wolfgang, Dr., In der Gartel 1, D-6458 Rodenbach (DE)**
Erfinder: **Kleinschmit, Peter, Dr., Wildaustrasse 19, D-6450 Hanau 9 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein Verfahren zur Herstellung von (Jodorganyl)alkoxisilanen, das eine Herstellung dieser Verbindungsklasse in beträchtlich kürzerer Reaktionszeit und bedeutend höherer Ausbeute als nach dem Stand der Technik erlaubt.

(Halogenorganyl)alkoxisilane stellen wertvolle chemische Reagenzien dar. Verwendet werden sie z.B. zur Modifizierung von über reaktive Oberflächengruppen, insbesondere OH-Gruppen, verfügende anorganische Trägermaterialien, zur Synthese von funktionellen (organyl)alkoxisilylsubstituierten Verbindungen, darunter auch entsprechenden Ammoniumverbindungen, die als Tenside, Algizide oder Bakterizide eingesetzt werden oder sie stellen generell Zwischenprodukte bei der Herstellung weiterer wichtiger Silane dar.

Beispiele für jedes dieser Anwendungsgebiete sind u. a. in der europäischen Patentanmeldung 0 008 902, in der DE-AS 10 23 462, der US-PS 4 093 642, der DE-OS 22 22 997, der DE-OS 24 08 192 und in der DE-AS 21 41 159 beschrieben.

Obwohl vom Gesichtspunkt der Reaktivität (Jodorganyl)alkoxisilane für diese Synthesen am geeignetsten wären, wurden bisher häufig nur die Chlor- oder Bromorganylderivate verwendet. Der Grund hierfür ist darin zu sehen, dass diese Halogenverbindungen bisher wesentlich leichter und in höherer Ausbeute zugänglich waren als die Jodhomologen, die üblicherweise durch Halogenaustausch erhalten werden; dies beschreibt z.B. M. G. Voronkov et al. in Zhurnal Obshchei Khimii 45, 9, 2010 (1975). Danach kann beispielsweise (3-Jodpropyl)trimethoxisilan nach 25-stündiger Umsetzung in siedendem Aceton, bei einem NaJ-Überschuss von ca. 6 Mol% in nur 50,7%iger Ausbeute oder (3-Jodpropyl)triethoxisilan nach ebenfalls 25-stündiger Umsetzung in demselben Lösungsmittel, bei einem NaJ-Überschuss von 5,5 Mol%, in nur 52,2%iger Ausbeute oder (2-Jodethyl)triethoxisilan nach 27-stündiger Umsetzung, bei einem Überschuss von 11 Mol%, in nur 40,9%iger Ausbeute erhalten werden. In anderen Veröffentlichungen, in denen (Jodorganyl)alkoxisilane erwähnt werden, wie in den US-Patentschriften 3 390 976 und 3 780 127, wird ebenfalls als Lösungsmittel bei der Herstellung ausschliesslich Aceton verwendet; Ausbeute und Reaktionszeit werden aber nur in letztgenannter Patentschrift angegeben. Die Ausbeute ist dabei mit ca. 41% ebenfalls recht niedrig. Aus «Angewandte Chemie» Bd. 86/5), Seiten 187-196, 1974 und «Phase Transfer Catalysis Principles and Techniques» von C.M. Stark und C. Liotta, Seiten 60, 61, 77 und 112-125, 1978 ist bekannt, quaternäre Ammonium-, Phosphonium-, Arsonium- oder Stiboniumsalze oder ein tertiäres Sulfoniumsalz mit Alkyl-, Aryl- oder Aralkylsubstituenten und einem organischen oder anorganischen Anion oder einen Kronenether als Phasentransfer-Katalysator zur Beschleunigung nucleophiler Verdrängungen gemäss $RX + Y^- \rightarrow RY + X^-$ ($X$ = Cl, Br; $Y^-$ = $J^-$) einzusetzen. Daraus konnte nicht ohne weiteres auf die Eignung solcher Katalysatoren für einen hochselektiv und ohne obligatorische Bindung an das Vorliegen eines Phasentransfer-Systems verlaufenden Austausch von Chlor oder Brom durch Jod in einer Chlor- oder Bromorganyl-Siliciumverbindung mit mindestens einer an das Silicium gebundenen Alkoxigruppierung geschlossen werden.

Es konnte nun ein Verfahren gefunden werden, das die Herstellung von (Jodorganyl)alkoxisilanen nachstehender Formel (1),

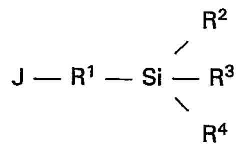 (1)

in der $R^1$ für eine geradkettige oder verzweigte Alkylengruppe mit 1 - 20 C-Atomen, eine Cycloalkylengruppe mit 5 - 8 C-Atomen und für Einheiten des folgenden Typs steht,

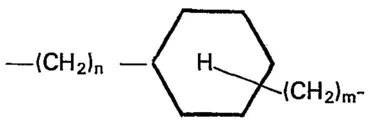

bzw.

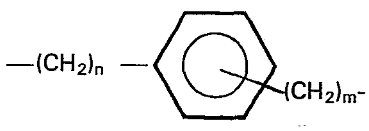

in denen n die zwischen 1 und 6 liegende Zahl der halogenständigen Methylengruppe angibt und m eine Zahl von 0 bis 6 sein kann, $R^2$ für eine Alkoxigruppierung mit 1 bis 5 C-Atomen, die Methoxiethoxi-, oder die Ethoxiethoxigruppierung steht, $R^3$ und $R^4$ dieselbe Bedeutung haben können wie $R^2$ oder für 1 bis 10 C-Atome enthaltende verzweigte oder lineare Alkylgruppen oder für eine gegebenenfalls mit einem Halogenatom substituierte Phenylgruppe stehen und untereinander gleich oder verschieden sein können, in sehr kurzen Reaktionszeiten und hohen Ausbeuten erlaubt und gegenüber der bisherigen Verfahrensweise mit deutlich geringerem Aufwand praktiziert werden kann. Es zeigte sich nämlich, dass der Austausch von Chlor oder Brom gegen Jod in 2 bis 8 Stunden quantitativ mit Produktausbeuten von über 80% durchgeführt werden kann, wenn die entsprechende Chlorverbindung oder Bromverbindung mit stöchiometrischen bis doppeltmolaren Mengen von Alkali-, Erdalkali- oder Ammoniumjodid in Gegenwart von 0,01 bis 5 Mol% eines quaternären Ammonium-, Phosphonium-, Arsonium-, Stibonium- oder eines tertiären Sulfoniumsalzes mit Alkyl-, Aryl- oder Aralkylsubstituenten und einem organischen oder anorganischen Anion oder aber eines Kronenethers als Katalysator in einer organischen Flüssigkeit oder in einem Gemisch von organischen Flüssigkeiten, welche(s) weitgehend inert gegenüber dem Silan ist und die Jodid- oder Silankomponente wenigstens teilweise lösen kann, umgesetzt wird.

Bevorzugte Beispiele für gängige, teilweise im Handel erhältliche Verbindungen dieser Art sind insbesondere das Tricapryl(methyl)ammoniumchlorid («Aliquat 336») oder andere, wie Benzyltrimethylammoniumchlorid oder -hydroxid, Benzyltributylammoniumchlorid, Tetra-n-butylammoniumchlorid, -bromid, -jodid oder -hydroxid, Cetyltrimethylammoniumchlorid oder -bromid, Tetra-n-pentylammoniumchlorid, Tetra-n-hexylammoniumchlorid bzw. -bromid, Tetrabutylammoniumhydrogensulfat, Benzyltributylammoniumchlorid, Trimethyloctadecylammoniumbromid, Tributylhexadecylphosphoniumbromid, Ethyltriphenylphosphoniumbromid, Tetraphenylphosphoniumbromid, Tetrabutylphosphoniumchlorid oder die verschiedenen Kronenether wie 1,4,7,10,13-Pentaoxa[13]orthocyclophan, 1,4,7,14,17,20-Hexaoxa[7,7]orthocyclophan, 1,4,7,10,17,20,23,26-Octaoxa[10,10]orthocyclophan, 1,4,7,14,23-Pentaoxa 7,2 orthocyclo[2]-(2,6)pyridinophan, 2,5,8,15,21-Hexaoxatricyclo-[20,4,0,$0^{9,14}$]hexacosan, 1,4,7,10-Tetraoxacyclododecan, 1,4,7,10,13-Pentaoxacyclopentadecan, 1,4,7,10,13,16-Hexaoxacyclooctadecan, N-Phenyl-13-aza-1,4,7,10-tetraoxacyclopentadecan, 1,13-Bis(8-chinolyl)-1,4,7,10,13-pentaoxatridecan, 1,4,10-Trioxa-7,13-diazacyclopentadecan, 1,7,10,16-Tetraoxa-4,13-diazacyclooctadecan, 4,13-Didecyl-1,7,10,16-tetraoxa-4, 13-diazacyclooctadecan, 1,7,10,13,19-Pentaoxa-4,16-diazacycloheneicosan, 4,7,13,18-Tetraoxa-1,10-diazabicyclo-[8,5,5]-eicosan, 4,7,13,16,21-Pentaoxa-1,10-diazabicyclo-(8,5,5)-tricosan, 4,7,13,16,21, 24-Hexaoxa-1,10-diazabicyclo-(8,8,8)-hexacosan, 5,6-Benzo-4,7,13,16,21,24-hexaoxa-1,10-diazabicyclo(8,8,8)-hexacosan, 5,6-14,15-Dibenzo-4,7, 13,16,21,24-hexaoxa-1,10-diazabicyclo-(8,8,8)-hexacosan, 5,6-14,15-Dicyclohexylen-4,7,13,16, 21,24-hexaoxa-1,10-diazabicyclo-[8,8,8]-hexacosan und 5-Decyl-4,7,13,16,21,24-hexaoxa-1,10-diazabicyclo-(8,8,8)-hexacosan.

Überraschend war, dass diese guten Ergebnisse nicht nur in Aceton, sondern auch in anderen organischen Flüssigkeiten erzielt werden können, die allerdings keine unerwünschte Reaktion mit dem Silan eingehen dürfen und wegen der Hydrolyseempfindlichkeit der Alkoxigruppierung(en) im wesentlichen wasserfrei sein und die Jodid- oder Silankomponente wenigstens teilweise zu lösen imstande sein müssen.

Geeignete Flüssigkeiten, die auch als Lösungs- oder Verdünnungsmittel bezeichnet werden könnten, sind cyclische oder offenkettige Ether, vorzugsweise Tetrahydrofuran, Dioxan, Trioxan, Diethyl-, Dipropyl- und Dibutylether, Ethylenglycoldimethylether oder Chlorkohlenwasserstoffe, vorzugsweise Methylenchlorid, Chloroform, 1,2-Dichlorethan, 1,1,1-Trichlorethan, Trichlorethylen, Chlorbenzol oder aliphatische und aromatische Nitroverbindungen, vorzugsweise Nitromethan, Nitroethan und Nitrobenzol oder aliphatische Nitrile, vorzugsweise Acetonitril oder Propionitril oder aber auch Dimethylformamid, Dimethylsulfoxid, Aceton, Diethylketon oder Methylethylketon und insbesondere niedere Alkohole, wie Methanol, Ethanol, n- und i-Propanol, n- und i-Butanol sowie Pentanol. Gerade die Verwendung von Alkoholen stellt einen wichtigen Aspekt des erfindungsgemässen Verfahrens dar, denn es bedeutet eine beträchtliche Reduzierung des präparativen Gesamtaufwandes, wenn nach der Veresterung der entsprechenden Vorstufe — in der Regel ist dies das entsprechende Chloralkylchlorsilan — auf eine Isolierung des gebildeten Chloralkylalkoxisilans verzichtet werden kann, sondern wenn stattdessen sofort nach Alkoholyse und Entfernung des dabei freigesetzten Chlorwasserstoffs sowie gegebenenfalls nach Zusatz weiteren überschüssigen Alkohols direkt der Austausch von Chlor gegen Jod bei Raumtemperatur, bevorzugt jedoch bei erhöhter Temperatur bis 250°C und Atmosphärendruck oder auch gegebenenfalls bei Überatmosphärendruck bis 200 bar, vollzogen wird. Es kann anschliessend nach Entfernung des gebildeten Natriumchlorids bzw. überschüssigen Jodids und des verwendeten Lösungsmittels das gebildete (Jodalkyl)alkoxisilan durch Destillation in reiner Form gewonnen werden.

Typische Silane, die nach dem erfindungsgemässen Verfahren herstellbar sind, sind z.B. $J-(CH_2)_3-Si(OC_2H_5)_3$, $J-(CH_2)_3-Si(OCH_3)_3$, $J-(CH_2)_2-Si(OC_2H_5)_3$, $J-CH_2-Si(OC_2H_5)_3$, $J-CH_2$ 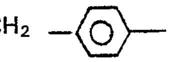 $Si(OCH_3)_3$, $J-(CH_2)_2-Si(OC_2H_5)_3$, $J-CH_2-Si(OC_2H_5)_3$, $J-CH_2-Si(OCH_3)_3$, $J-(CH_2)_3-Si(OC_2H_5)_2(CH_3)$, $J-(CH_2)_3-Si(OC_2H_5)-(C_6H_5)_2$ usw.

Eine günstige Variante der Erfindung sieht vor, dass die Verbindungen der Formel (1) unter Verwendung von NaJ oder KJ in dem zu der jeweils siliciumständigen Alkoxi-, Methoxiethoxi- oder Ethoxiethoxigruppierung korrespondierenden Alkohol hergestellt werden.

Bevorzugt im Rahmen der Erfindung ist auch, dass die Reste $R^2$, $R^3$ und $R^4$ gleiche Bedeutung haben.

Obwohl aus ökonomischen Gründen bevorzugt wasserfreies NaJ oder KJ als Jodidspender verwendet werden, können prinzipiell durchaus auch andere Alkalimetalljodide oder auch Erdalkalimetall- und Ammoniumjodide, wie z.B. LiJ, $MgJ_2$, $CaJ_2$, $SrJ_2$ oder $BaJ_2$, $NH_4J$, $(H_3C)_4NJ$ eingesetzt werden. Eine quantitative Umsetzung kann bereits mit einem stöchiometrischen Molverhältnis Jodidspender : (Chlororganyl)alkoxisilan erzielt werden. Im Sinne einer kürzeren Gesamtumsetzungszeit wird jedoch ein Molverhältnis zwischen 1 : 1 und 2 : 1 bevorzugt.

Nachfolgend wird das offenbarte Verfahren anhand repräsentativer Ausführungsbeispiele weiter erläutert. Diese Beispiele lassen erkennen, dass die Erfindung im beanspruchten Rahmen ausführbar ist. Prinzipiell sind dazu als Einsatzstoffe nötig: Eine Chlor- oder Bromorganyl-Siliciumverbindung mit mindestens einer an das Silicium gebundenen Alkoxigruppierung, ein anorganischer Jodidspender und eine mit organischen Resten substituierte Oniumverbindung oder ein Kronenether als Katalysator sowie ein Lösungsvermittler für diese Reaktanten.

*Beispiel 1*

300,5 g (2,00 Mol) NaJ und 7,11 g (16,09 mMol ≙ 0,80 Mol% bez. auf NaJ) eines bei Firma Merck (Darmstadt) erhältlichen Phasentransferkatalysators der Bezeichnung «Aliquat 336», bestehend im

wesentlichen aus Tricaprylmethylammoniumchlorid (mittleres Molgewicht: 442), wurden in 300 ml getrocknetem Ethanol vereinigt. Anschliessend wurde diese Suspension bei Raumtemperatur, binnen 10 min mit 355,4 g (1,67 Mol) $ClCH_2Si(OC_2H_5)_3$ versetzt und unter Rühren auf Rückflusstemperatur erhitzt. Nach 6-stündigem Erhitzen konnte NMR-spektroskopisch kein Ausgangssilan mehr nachgewiesen werden. Dann wurde der Alkohol zunächst bei Normaldruck, später bei 50 - 100 mbar abdestilliert und die verbleibende Flüssigkeit durch Zentrifugieren und Abdekantieren vom vorhandenen Feststoff abgetrennt. Nach dessen Auswaschen mit 2 × 100 ml Methylenchlorid und Vereinigen der Zentrifugate wurde zunächst das anwesende Methylenchlorid bei Normaldruck abgedampft und anschliessend das gebildete $JCH_2Si(OC_2H_5)_3$ im Vakuum destilliert ($Kp_{30mbar}$ : 113°C). Ausbeute: 436,9 g (86,0% d. Theorie).

*Beispiel 2*

1080,0 g (5,095 Mol) $Cl(CH_2)_3SiCl_3$ wurden unter Ausblasen des freiwerdenden Chlorwasserstoffs mit Stickstoff binnen 2,5 h mit 538,7 g (16,81 Mol) $CH_3OH$ versetzt. Nach Beendigung der Zugabe wurde noch 2 weitere Stunden Stickstoff durch die Reaktionslösung geblasen und die dann noch anwesende Salzsäure durch Zusatz von 5,5 g (0,1 Mol) $NaOCH_3$ neutralisiert. Anschliessend wurden direkt 300 ml getrocknetes Methanol, 916,4 g (6,11 Mol) NaJ sowie 60,9 g (0,12 Mol ≙ 2 Mol% bez. auf NaJ) Tributylhexadecylphosphoniumbromid zugesetzt und 6 h unter Rückfluss erhitzt. Die weitere Aufarbeitung erfolgte analog zu Beispiel 1: Nach Entfernen des Methanols, Abtrennung des Feststoffs und Waschen mit 2 × 250 ml Methylenchlorid, verbunden mit dessen anschliessendem Abdampfen und nachfolgender Destillation des Produkts ($Kp_{3mbar}$ : 95°C) im Vakuum konnten 1175,4 g (79,5% d. Theorie) $J(CH_2)_3Si(OCH_3)_3$ erhalten werden.

*Beispiel 3*

Nach 7,5-stündiger Umsetzung von 120 g (0,341 Mol) Br 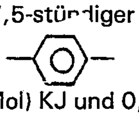 $Si(OC_2H_5)_2(CH_2)_3Cl$, 62,3 g (0,375 Mol) KJ und 0,854 g (3,75 mMol) Benzyltriethylammoniumchlorid in 150 ml siedendem Acetonitril konnten analog zu Beispiel 1 121,2 g (80,2% d. Theorie) Br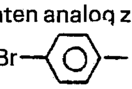 $Si(OC_2H_5)_2(CH_2)_3J$ ($Kp_{0,05mbar}$ : 120°C) erhalten werden.

*Beispiel 4*

Durch 5-stündige Umsetzung von 188,3 g (0,763 Mol) $ClCH_2$ 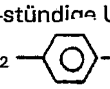 $Si(OCH_3)_3$, 125,82 g (0,839 Mol) NaJ und 1,/2 g (3,89 mMol) «Aliquat 336» in 200 ml getrocknetem Aceton konnten analog zu Beispiel 1 201,03 g (77,9% d. Theorie) $JCH_2$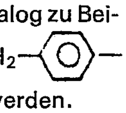 $Si(OCH_3)_3$ ($Kp_{0,5mbar}$ : 117°C) erhalten werden.

*Beispiel 5*

200 g (0,44 Mol) $Cl(CH_2)_{18}Si(OC_2H_5)_3$, 100,5 g (0,50 Mol) $[N(CH_3)_4]J$ und 3,49 g (3 Mol% bez. auf die Jodidkomponente) eines Kronenethers der Formel $C_{12}H_{24}O_6$ wurden in 250 ml getrocknetem Ethanol vereinigt. Es wurde 8 Stunden unter Rückfluss gerührt und anschliessend das Gemisch zunächst von schwerlöslichen Bestandteilen befreit. Nach der destillativen Entfernung des Ethanols am Rotationsverdampfer wurde erneut zentrifugiert und der feste Rückstand mit 2 × 100 ml n-Hexan ausgewaschen. Waschlösung und Zentrifugat wurden anschliessend zunächst bei Normaldruck und später unter Anlegen von Hochvakuum an einer Kurzwegdestille destilliert, wobei das gewünschte Produkt $J(CH_2)_{18}Si(OC_2H_5)_3$ bei einer Heizmanteltemperatur von 225 - 230°C (0,05 mbar) überging. Ausbeute: 179,8 g (75,0% d. Theorie).

**Patentansprüche**

1. Verfahren zur Herstellung von (Jodorganyl)-alkoxisilanen der allgemeinen Formel (1)

$$J - R^1 - Si(R^2)(R^3)(R^4) \qquad (1)$$

in der $R^1$ für eine geradkettige oder verzweigte Alkylengruppe mit 1 - 20 C-Atomen, eine Cycloalkylengruppe mit 5 - 8 C-Atomen und für Einheiten des folgenden Typs steht,

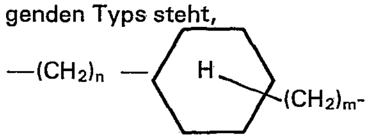

bzw.

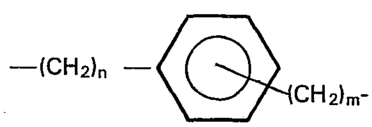

in denen n die zwischen 1 und 6 liegende Zahl der halogenständigen Methylengruppen angibt und m eine Zahl von 0 bis 6 sein kann,

$R^2$ für eine Alkoxigruppierung mit 1 bis 5 C-Atomen, die Methoxiethoxi- oder Ethoxiethoxigruppierung steht,

$R^3$ und $R^4$ dieselbe Bedeutung haben können wie $R^2$ oder für 1 bis 10 C-Atomen enthaltende verzweigte oder lineare Alkylgruppen oder für eine gegebenenfalls mit einem Halogenatom substituierte Phenylgruppe stehen und untereinander gleich oder verschieden sein können, durch Halogenaustausch, dadurch gekennzeichnet, dass die entsprechende Chlorverbindung oder Bromverbindung mit stöchiometrischen bis doppeltmolaren Mengen von Alkali-, Erdalkali- oder Ammoniumjodid in Gegenwart von 0,01 bis 5 Mol% eines quaternären Ammonium-, Phosphonium-, Arsonium-, Stibonium- oder eines tertiären Sulfoniumsalzes mit Alkyl-, Aryl- oder Aralkylsubstituenten und einem organischen oder anorganischen Anion oder eines Kronenethers in cyclischen oder offenkettigen Ethern, Chlorkohlenwasserstoffen oder aliphatischen und aromatischen Nitroverbindungen oder aliphatischen Nitrilen oder aber auch Dimethylformamid, Dimethylsulfoxid, Aceton, Diethylketon oder Methylethylketon und insbesondere niederen Alkoholen, umgesetzt wird.

2. Verfahren nach Anspruch 1, dadurch gekennzeichnet, dass die Umsetzung in Tetrahydrofuran, Dioxan, Trioxan, Diethyl-, Dipropyl- und Dibutylether, Ethylenglycoldimethylether oder Methylenchlorid, Chloroform, 1,2-Dichlorethan, 1,1,1-Trichlorethan, Trichlorethylen, Chlorbenzol oder Nitromethan, Nitroethan und Nitrobenzol oder Acetonitril oder Propionitril oder insbesondere Methanol, Ethanol, n- und i-Propanol, n- und i-Butanol sowie Pentanol, umgesetzt wird.

3. Verfahren nach Anspruch 1 oder 2, dadurch gekennzeichnet, dass die Verbindungen der Formel (1) unter Verwendung von Natriumjodid oder Kaliumjodid in dem zu der jeweiligen siliciumständigen Alkoxi-, Methoxi- oder Ethoxiethoxigruppierung korrespondierenden Alkohol hergestellt werden.

4. Verfahren nach den Ansprüchen 1 - 3, wobei $R^2$, $R^3$ und $R^4$ gleiche Bedeutung haben.

## Claims

1. A process for the production by halogen exchange of (iodo-organyl) alkoxysilanes corresponding to the general formula (1)

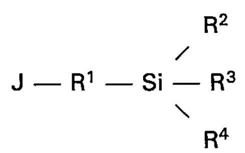

(1)

wherein

$R^1$ represents a straight-chain or branched alkylene group having from 1 to 20 carbon atoms, a cycloalkylene group having from 5 to 8 carbon atoms and units of the following type,

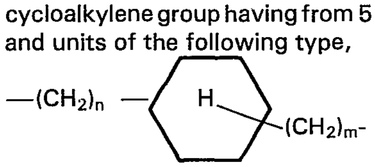

or

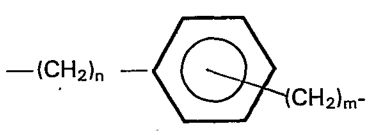

wherein

n gives the number between 1 and 6 of methylene groups bonded to the halogen and

m may be an integer from 0 to 6,

$R^2$ represents an alkoxy group having from 1 to 5 carbon atoms or a methoxyethoxy or ethoxyethoxy group,

$R^3$ and $R^4$ may be the same as $R^2$ or represent branched or linear alkyl groups containing from 1 to 10 carbon atoms or a phenyl group which may be substituted by a halogen atom and may be the same or different, characterised in that the corresponding chlorine compound or bromine compound is reacted with from stoichiometric to double molar quantities of alkali metal, alkaline earth metal, or ammonium iodide in the presence of 0.01 to 5 mol% of a quaternary ammonium, phosphonium, arsonium, stibonium or a tertiary sulphonium salt having alkyl, aryl or aralkyl substituents and an organic or inorganic anion or a crown ether in cyclic or open-chain ethers, chlorinated hydrocarbons or aliphatic and aromatic nitro compounds or aliphatic nitriles or dimethylformamide, dimethylsulphoxide, acetone, diethylketone or methylethylketone and in particular low alcohols.

2. A process according to claim 1, characterised in that the reaction is carried out in tetrahydrofuran, dioxane, trioxane, diethyl, dipropyl and dibutyl ether, ethylene glycol dimethylether or methylene chloride, chloroform, 1,2-dichloroethane, 1,1,1-trichloroethane, trichloroethylene, chlorobenzene or nitromethane, nitroethane and nitrobenzene or acetonitrile or propionitrile or in particular methanol, ethanol, n- and i-propanol, n- and i-butanol or pentanol.

3. A process according to claim 1 or 2, characterised in that the compounds according to formula (1) are produced using sodium iodide or potassium iodide in the alcohol corresponding to the alkoxy, methoxy or ethoxy group bonded in each case to the silicon atom.

4. A process according to claims 1 to 3, $R^2$, $R^3$ and $R^4$ being the same.

## Revendications

1. Procédé pour la fabrication de (iodorganyl)-alcoxysilanes répondant à la formule générale (1):

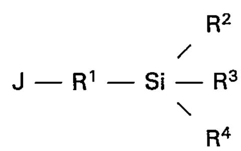

(1)

où $R^1$ représente un groupe alcoylène linéaire ou ramifié à 1 à 20 atomes de carbone, un groupe cycloalcoylène avec 5 à 8 atomes de C et des ensembles du type suivant:

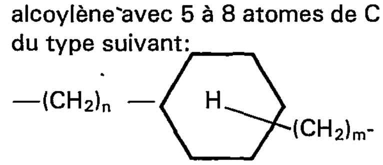

ou

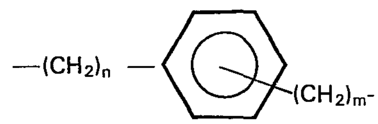

dans lesquelles n indique le nombre compris entre 1 et 6 des groupes méthylène fixés sur l'halogène et m peut être un nombre de 0 à 6, $R^2$ représente un groupe alcoxy avec 1 à 5 atomes de C, qui peut être un groupe méthoxyéthoxy ou un groupe éthoxyéthoxy, $R^3$ et $R^4$ peuvent avoir la même signification

que $R^2$, où peuvent représenter des groupes alcoyle, ramifiés ou linéaires, contenant de 1 à 10 atomes de C, ou un groupe phényle éventuellement substitué par un atome d'halogène, et peuvent être semblables ou différents, par échange d'halogènes, procédé caractérisé en ce que l'on fait réagir les composés chlorés ou bromés correspondants avec des proportions stoechiométriques ou plus grandes, que l'on peut augmenter jusqu'au double de la proportion molaire, d'iodures de métaux alcalins, alcalino-terreux ou d'ammonium, en présence de 0,01 à 5 mol% d'un sel quaternaire d'ammonium, phosphonium, arsonium, stibonium, ou d'un sel tertiaire de sulfonium avec des substituants alcoyle, aryle ou aralcoyle, et un anion organique ou minéral ou encore un éther-couronne dans des éthers cycliques ou à chaîne ouverte, des hydrocarbures chlorés, ou des composés nitrés aliphatiques ou aromatiques, ou encore de la diméthylformamide, ou diméthylsulfoxyde, de l'acétone, diéthylcétone ou méthyléthylcétone, et en particulier des alcools inférieurs.

2. Procédé suivant la revendication 1, caractérisé en ce que la réaction peut être réalisée dans les tétrahydrofuranne, dioxane, trioxane, éthers diéthylique, dipropylique et dibutylique, diméthyléther d'éthylèneglycol, ou hydrocarbures chlorés, de préférence les chlorure de méthylène, chloroforme, 1,2-dichloréthane, 1,1,1-trichloréthane, trichloréthylène, chlorobenzène, ou des composés nitrés aliphatiques et aromatiques, de préférence les nitrométhane, nitroéthane et nitrobenzène, ou des nitriles aliphatiques, de préférence les acétonitrile ou propionitrile, ou aussi les diméthylformamide, diméthylsulfoxyde, acétone, diéthylcétone ou méthyléthylcétone et en particulier les alcools inférieurs tels que les méthanol, éthanol, n- et i-propanol, n- et i-butanol, ainsi que le pentanol.

3. Procédé suivant l'une des revendications 1 et 2, caractérisé en ce que les composés de formule (1) sont fabriqués en utilisant de l'iodure de sodium ou de potassium dans l'alcool correspondant aux groupes alcoxy, méthoxy, ou éthoxyéthoxy, fixés chaque fois sur le silicium.

4. Procédé suivant l'une quelconque des revendications 1 à 3, caractérisé en ce que $R^2$, $R^3$ et $R^4$ ont la même signification.